# EUROPEAN PATENT SPECIFICATION

(11) **EP 3 006 317 B1**
(45) Date of publication and mention of the grant of the patent: **08.08.2018**
(21) Application number: 14804694.9
(22) Date of filing: 20.05.2014
(51) Int. Cl.: B62J 9/00, B62J 99/00, B62J 17/02, B62K 19/46

(54) **ARTICLE STORAGE STRUCTURE FOR AUTOMATIC TWO-WHEELED VEHICLES**
ARTIKELAUFBEWAHRUNGSSTRUKTUR FÜR AUTOMATISCHE ZWEIRADFAHRZEUGE
STRUCTURE DE STOCKAGE D'ARTICLES POUR VÉHICULES À DEUX ROUES AUTOMATIQUES

(30) Priority: 31.05.2013 JP 2013116400
(43) Date of publication of application: 13.04.2016
(73) Proprietor: Honda Motor Co., Ltd., Minato-ku Tokyo 107-8556 (JP)
(72) Inventor: OISHI, Kenichi, Wako-shi Saitama 351-0193 (JP); MIYAJIMA, Yu, Wako-shi Saitama 351-0193 (JP)
(74) Representative: Fioravanti, Corrado
(86) International application number: PCT/JP2014/063311
(87) International publication number: WO 2014/192587

(56) References cited:
- EP-A1- 2 628 669
- EP-A1- 2 979 963
- EP-A2- 2 202 137
- JP-A- S5 849 578
- JP-A- 2003 335 280
- JP-A- 2003 335 280
- JP-U- S6 414 486

## Description

### Technical Field

The present invention relates to an article storage structure for an automatic two-wheeled vehicle.

### Background Art

As an article storage structure for an automatic two-wheeled vehicle, there is known one in which an article storage portion is provided below a riding seat and a power supply socket for use in charging an external electric device is disposed in the article storage portion (For example, refer to patent literature 1). An article storage structure for an automatic two-wheeled vehicle according to the preamble of claim 1 is disclosed in EP 2 979 963 A1, which is comprised in the state of the art according to Article 54(3) EPC. Other examples of article storage structures are known from Patent Literature 3 and 4.

### Related Art Literature

### Patent Literature

Patent Literature 1: JP-B-4905288
Patent Literature 2: EP 2 979 963 A1
Patent Literature 3: EP 2 202 137 A2 shows all the features of the preamble of independent claim 1.
Patent Literature 4: JP 2003 335280 A

### Summary of the Invention

### Problem that the Invention is to Solve

Incidentally, in the article storage structure described in patent literature 1 above, for example, the riding seat needs to be opened to expose the article storage portion in order to charge an external electric device. However, a driver has to stop an automatic two-wheeled vehicle to dismount for the above operation, which is very troublesome.

The invention has been made in view of these situations and an object thereof is to provide an article storage structure for an automatic two-wheeled vehicle which can facilitate the attachment and detachment of an external electric device to and from a power supply socket.

### Means for Solving the Problem

According to the invention, there is provided an article storage structure for an automatic two-wheeled vehicle including:
a handlebar which is provided at a vehicle front portion;
a riding seat which is disposed behind the handlebar;
a cover member which covers a vehicle external side;
an article storage portion which is disposed inside the cover member and enables to store an article;
a lid member which opens and closes an opening portion of the article storage portion; and
a power supply socket which is provided in the article storage portion and enables to connect with an external electric device,
wherein a socket connection port of the power supply socket is disposed in a position where the socket connection port faces the opening portion.

In the article storage structure for the automatic two-wheeled vehicle, a configuration may be adopted in which the cover member has a front cover which covers a front of a headstock and a rear cover which covers a rear of the headstock, and the opening portion is provided in a rear wall surface of the rear cover which is oriented to the rear of a vehicle body.

In the article storage structure for the automatic two-wheeled vehicle, a configuration may be adopted in which the socket connection port is provided to deflect from an opening center of the opening portion in a vehicle's width direction and is opened towards the opening center.

In the article storage structure for the automatic two-wheeled vehicle, a configuration may be adopted in which the opening portion is provided on a left-hand or right-hand side of a vehicle's width direction center line, and the socket connection port is provided oriented inwards in the vehicle's width direction.

In the article storage structure for a automatic two-wheeled vehicle, a configuration may be adopted in which an storage space of the article storage portion has a first storage space which includes a first inner wall which faces the opening portion, and a second storage space which includes a second inner wall which is positioned closer to the front of the vehicle and further inwards in the vehicle's width direction than the first inner wall, and the socket connection port is provided in the first inner wall.

In the article storage structure for the automatic two-wheeled vehicle, a configuration may be adopted in which the second storage space is disposed offset in a further downward side of the vehicle than the first storage space.

In the article storage structure for the automatic two-wheeled vehicle, a configuration may be adopted in which an external wall of the second storage space is formed inclined not only to follow an external surface of the front cover and but also to approach an internal wall of the second storage space as it extends towards the front of the vehicle.

### Advantage of the Invention

According to the article storage structure for an automatic two-wheeled vehicle, the socket connection port of the power supply socket is disposed in the position where the socket connection port faces the opening portion. Consequently, an easy access from the opening portion to the socket connection port is provided, so that an external electric device can easily be attached to and detached from the power supply socket.

Since the opening portion is provided in the rear wall surface of the rear cover which faces the rear of the vehicle body, the opening portion is formed to face the driver. Therefore, since the driver can place and remove the external electric device in and from the article storage portion while remaining seated on the riding seat, the external electric device can be attached to and detached from the power supply socket more easily.

The socket connection port is provided to deflect from the opening center of the opening portion in the vehicle's width direction and is opened towards the opening center. Consequently, when the external electric device is attached to and detached from the socket connection port, the operator can locate his or her hand in the opening center so that the hand stays away from an edge portion of the opening portion. Therefore, since the operator can avoid a risk of his or her hand being brought into contact with the edge portion, the external electric device can be attached to and detached from the power supply socket more easily.

The opening portion of the article storage portion is provided on the left-hand or right-hand side of the vehicle's width direction center line, and the socket connection port is provided oriented inwards in the vehicle's width direction. Consequently, for example, the driver can place and remove an article in and from the article storage portion while remaining seated on the riding seat. Thus, the external electric device can be attached to and detached from the power supply socket further easily.

The socket connection port is provided in the first inner wall which lies near the opening portion and which faces the opening portion. Consequently, the socket connection port is disposed in the position which is easily visible from the opening portion, whereby the external electric device can be attached to and detached from the power supply socket further easily. Since an article is stored in the second storage space which is situated further inwards than the first storage space, there occurs no such situation that the socket connection port is hidden by the stored article, and hence, nothing interrupts the attachment and detachment of the external electric device.

The second storage space is disposed offset in a further downward side of the vehicle than the first storage space. Consequently, the article to be stored is stored in the second storage space in such a way as to fall thereinto based on its own weight. Therefore, since the article to be stored is stored in the position which lies away from the socket connection port which is provided in the first storage space, the external electric device can be attached to and detached from the power supply socket further easily. Since the second storage space is the storage space which extends downwards, the article to be stored can be placed in and removed from the storage space easily.

The external wall of the second storage space is formed inclined not only to follow the external surface of the front cover and but also to approach the internal wall of the second storage space as it extends towards the front of the vehicle. Consequently, the second storage space is disposed further inwards in the vehicle's width direction than the first storage space. Therefore, since a risk of the socket connection port being hidden by the article stored in the second storage space can be avoided, the external electric device can be attached to and detached from the power supply socket further easily. Since the external wall of the second storage space is formed to follow the external surface of the front cover, the degree of freedom in designing the front cover is enhanced, thereby making it possible to improve the external appearance of the automatic two-wheeled vehicle.

### Brief Description of the Drawings

Fig. 1 is a left side view illustrating an automatic two-wheeled vehicle to which an embodiment of an article storage structure according to the invention is applied.
Fig. 2 is a plan view resulting when the automatic two-wheeled vehicle shown in Fig. 1 is seen from thereabove.
Fig. 3 is a view of a riding portion of the automatic two-wheeled vehicle shown in Fig. 1 as seen from the rear of the vehicle.
Fig. 4 is an enlarged perspective view showing a state in which a lid portion of the article storage portion shown in Fig. 1 is opened.
Fig. 5 is a perspective view illustrating a state in which the article storage portion shown in Fig. 1 is attached to an inner side of the front cover.
Fig. 6 is a top view of the article storage portion shown in Fig. 5.
Fig. 7 is a left side view of the article storage portion shown in Fig. 5.
Fig. 8 is a view of the article storage portion shown in Fig. 5 as seen from the front of the vehicle.

### Mode for Carrying out the Invention

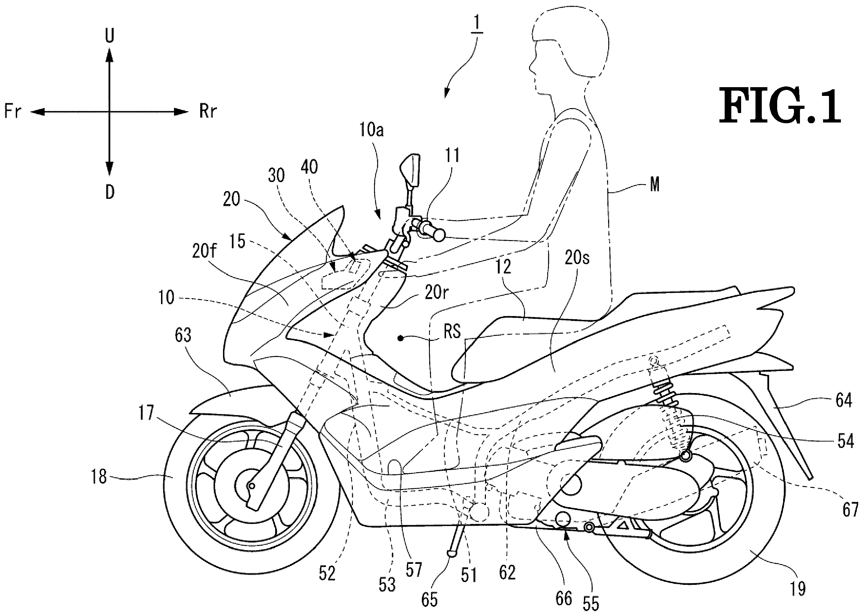

Hereinafter, referring to Figs. 1 to 8, an automatic two-wheeled vehicle 1, which is a riding type vehicle according to an embodiment of the invention, will be described specifically. It is noted that the drawings should be seen in the direction in which reference numerals given in the drawings should look proper. In the drawings, Fr, Rr, U, D, R, L denote a front direction, a rear direction, an up direction, a down direction, a right direction and a left direction, respectively.

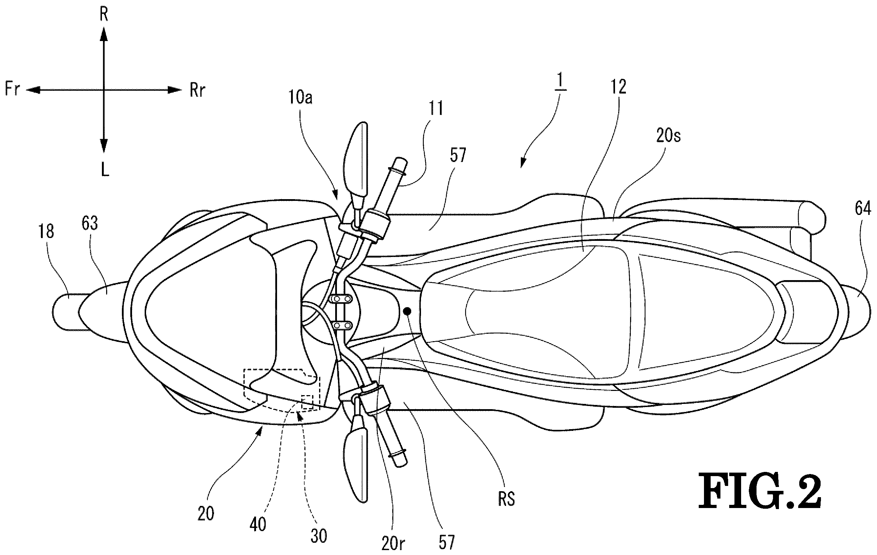

An automatic two-wheeled vehicle 1 of this embodiment includes, as shown in Fig. 1, a body frame 10, and this body frame 10 includes a headstock 15 which is provided at a vehicle front portion 10a of the body frame 10, a down tube 52 which extends rearwards and downwards from the headstock 15, a front frame 51 which extends substantially rearwards from a middle portion of the down tube 52, a lower tube 53 which extends rearwards from a lower end of the down tube 52, and a rear frame 62 which extends upwards from a rear end of the lower tube 53 and then extends rearwards and upwards. Then, the body frame 10 is covered on an external side thereof by a cover member 20 (Refer to Fig. 2.).

Additionally, the automatic two-wheeled vehicle 1 includes a front fork 17 which is mounted on the headstock 15 so as to turn thereon, a handlebar 11 which is mounted at an upper end portion of the front fork 17, a front wheel 18 which is mounted rotatably at a lower end portion of the front fork 17, a power unit 55 which is mounted at a rear end portion of the lower tube 53 so as to swing in a vertical direction, a rear wheel 19 which is mounted at a rear end portion of the power unit 55, and a rear shock absorber 54 which is mounted between a rear end of the power unit 55 and the rear frame 62.

It is noted that reference numeral 63 given in Fig. 1 denotes a front mudguard, reference numeral 64 denotes a rear mudguard, reference numeral 65 denotes a side stand, reference numeral 66 denotes an exhaust pipe, and reference numeral 67 denotes a muffler. A driver M is seated on a riding seat 12 which is disposed behind the handlebar 11 to ride the automatic two-wheeled vehicle with feet placed on a lowered floor portion 57, which will be described later, and hands gripping on the handlebar 11.

The cover member 20 has a front cover 20f which covers a front of the headstock 15, a rear cover 20r which covers a rear of the headstock 15, a side cover 20s which continues to a lower edge of the rear cover 20r and which extends to the rear, and a lowered floor portion 57 which connects to a lower edge of a front portion of the side cover 20s and which is formed substantially horizontal. A riding space RS is defined in front of the riding seat 12 by the rear cover 20r and the riding seat 12.

In this embodiment, as shown in Figs. 1 and 2, an article storage portion 30 where an article can be stored is provided on a left-hand side of a space defined between the front cover 20f and the rear cover 20r in a vehicle's width direction.

As shown in Figs. 1 to 3, the article storage portion 30 includes a lid member 31 which opens and closes an opening portion 30a thereof. The opening portion 30a is formed in a rear wall surface 20rb of the rear cover 20r which is oriented to the rear of a vehicle body in a position which lies on a left-hand side of a vehicle's width direction center line CL. Namely, the opening portion 30a of the article storage portion 30 is opened towards the rear of the vehicle body. Consequently, for example, a driver M can open or close the lid member 31 with his or her hand by stretching a corresponding arm while he or she remains seated on the riding seat 12.

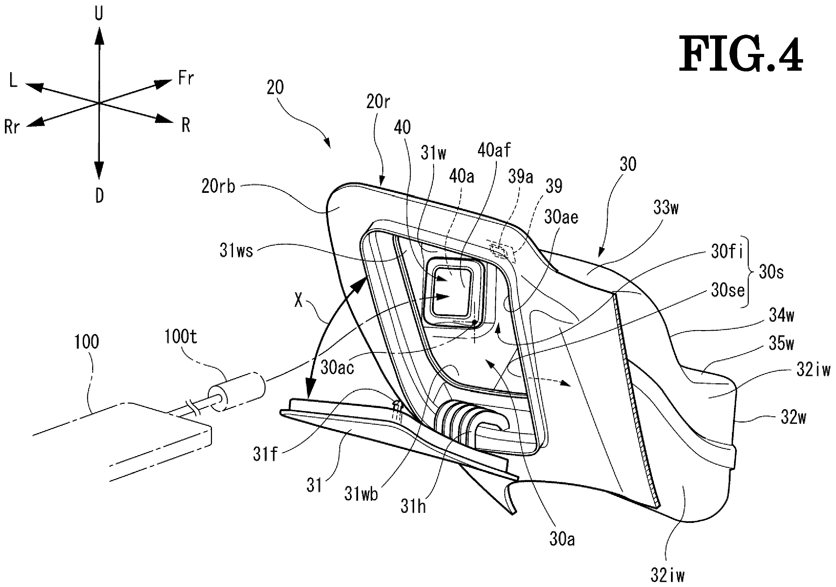

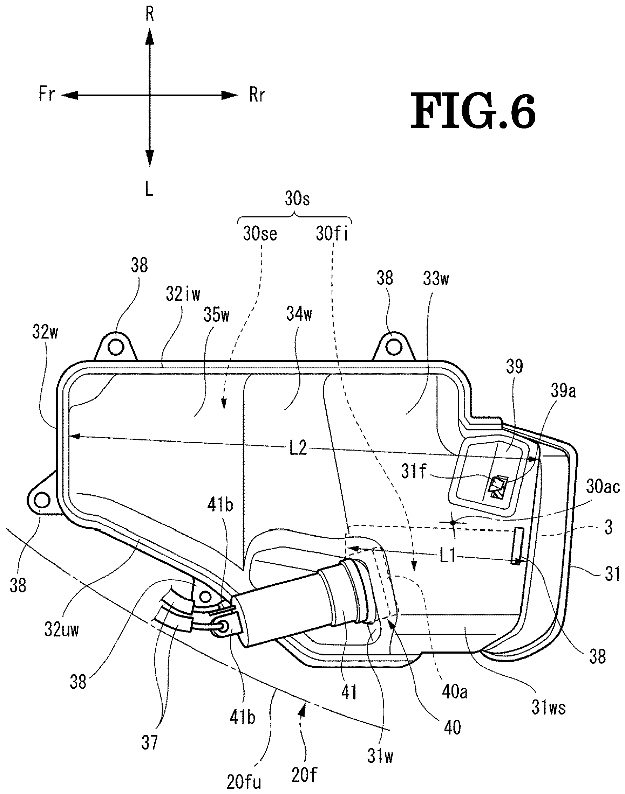

For example, as shown in Fig. 4, the lid member 31 includes an opening and closing hinge 31h on a lower side thereof and is configured to be opened and closed in an up-to-down direction (a direction indicated by an arrow X). Additionally, the lid member 31 includes a locking hook 31f on a top right-hand side thereof. The locking hook 31f is configured to be engaged with and disengaged from an engaging hole 39a in an storage portion-side locking portion 39 (Refer to Fig. 6.) which is formed on an upper wall 33w. The lid member 31 is formed so as to follow substantially the rear wall surface 20rb of the rear cover 20r in a closed state.

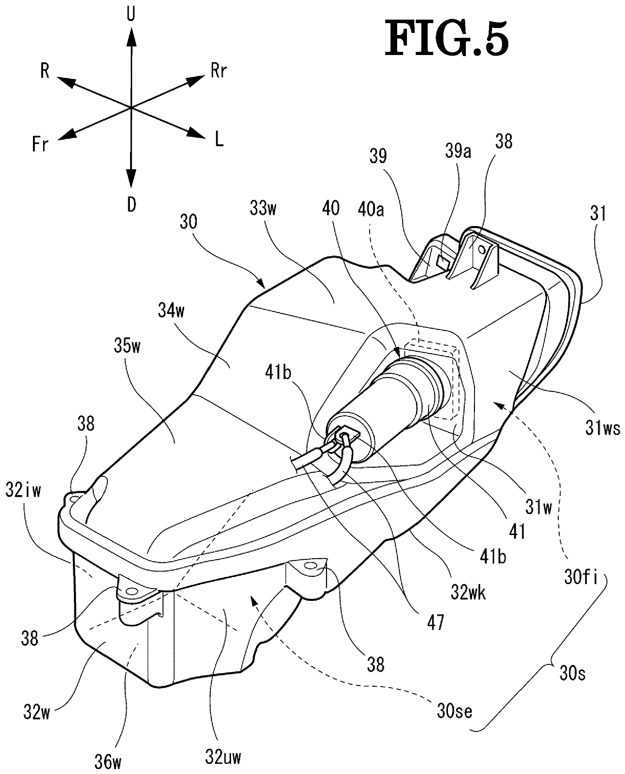

As shown in Figs. 5 to 8, the article storage portion 30 has an storage space 30s which extends forwards and downwards of the vehicle from the lid member 31 in an interior thereof. This storage space 30s has a first storage space 30fi having an storage depth (a depth from the opening portion 30a to a front side of the vehicle) of a shallow dimension L1 and a second storage space 30se which communicates with the first storage space 30fi and which has an storage depth of a deep dimension L2.

The first storage space 30fi is a space in the storage space 30s which lies leftwards in the vehicle's width direction and nearer to the rear. The first storage space 30fi is the space which is surrounded on upper, lower, front, rear and left-hand sides thereof by a substantially vertical first inner wall 31w which lies a shallow dimension L1 forwards from the opening portion 30a and which faces the opening portion 30a, an upper wall 33w which extends substantially horizontally on an upper side of the first inner wall 31w, a first lower wall 31wb which extends to the rear of the vehicle on a lower side of the first inner wall 31w to constitute a bottom (a vertical depth dimension HI) in the up-to-down direction of the vehicle, a left side wall 31ws which extends in the vertical direction and to the rear of the vehicle at a left-hand side of the first inner wall 31w, and the lid member 31 which covers the opening portion 30a.

The second storage space 30se is a space in the storage space 30s which lies rightwards in the vehicle's width direction and nearer to the front. The second storage space 30se is the space which is surrounded on upper, lower, front, rear, left- and right-hand sides thereof by a substantially vertical second inner wall 32w which lies a deep dimension L2 forwards from the opening portion 30a and which lies further forwards than the first inner wall 31w and on a right-hand side in the vehicle's width direction, the upper wall 33w which extends substantially horizontally on an upper side of the second inner wall 32w and inclined upper walls 34w, 35w which are inclined slightly downwards towards the front of the vehicle, a second lower wall 32wb which extends to the rear of the vehicle on a lower side of the second inner wall 32w to constitute a bottom (a vertical depth dimension H2) in the up-to-down direction of the vehicle, an external wall 32uw which extends to the rear of the vehicle at a left-hand side of the second inner wall 32w, an internal wall 32iw which extends to the rear of the vehicle at a right-hand side of the second inner wall 32w, an outer wall 32wf which extends from a rear end of the second lower wall 32wb to the rear of the vehicle while being inclined upwards, and the lid member 31 which covers the opening portion 30a. Additionally, the second storage space 30se is formed further forwards and downwards than the first storage space 30fi as a deep space.

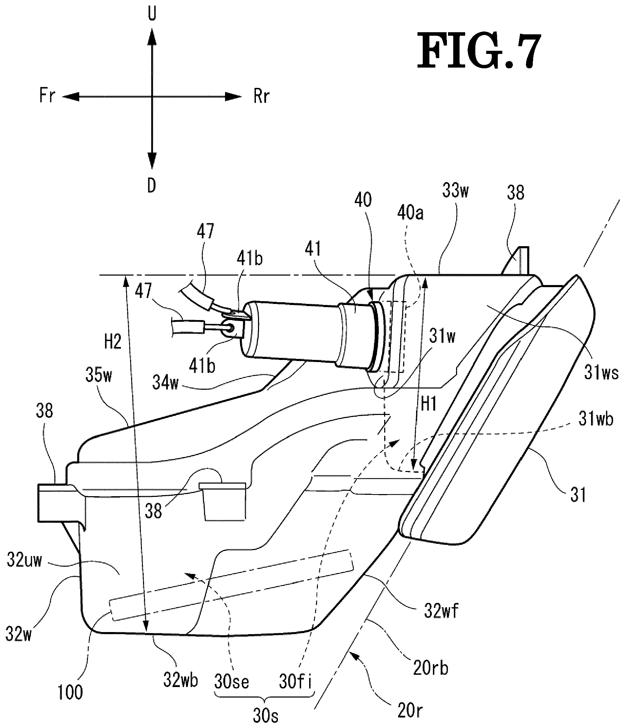

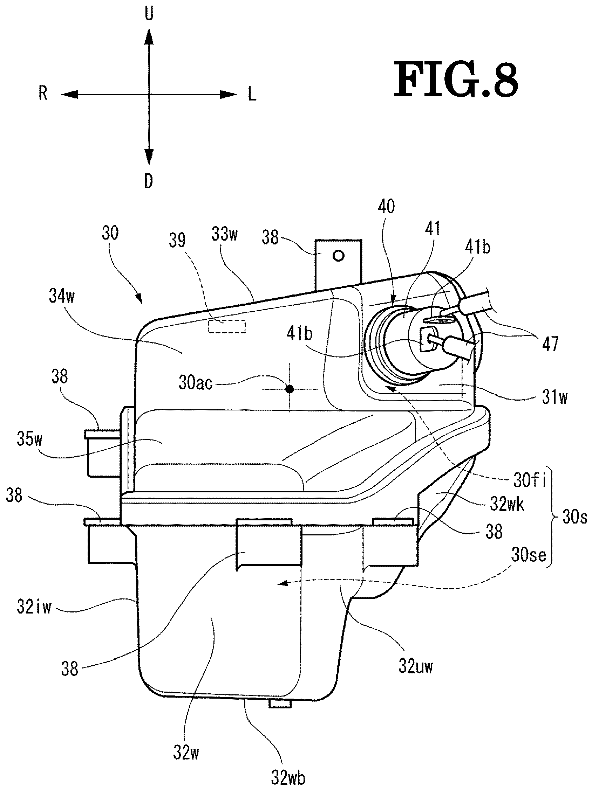

In this way, when seen from a side as shown in Fig. 7, the first storage space 30fi and the second storage space 30se make up a two-stage construction of the first lower wall 31 wb of the shallow vertical depth dimension HI and the second lower wall 32wb of the deep vertical depth dimension H2, and the second storage space 30se is offset downwards of the vehicle from the first storage space 30fi. Additionally, when seen from the front as shown in Fig. 8, the right-hand side wall of the article storage portion 30 is constructed as a substantially vertical surface, while the left-hand side wall of the article storage portion 30 includes an inclined wall surface 32wk and is then constructed as an inclined surface which narrows as it extends downwards.

Additionally, as shown in Fig. 6, the external wall 32uw of the second storage space 30se is formed inclined not only to follow the external surface 20fu of the front cover 20f but also to approach the internal wall 32iw of the second storage space 30se as it extends towards the front of the vehicle.

In the article storage portion 30 of this embodiment, although not limited particularly, as shown in Figs. 5 to 8, the article storage portion 30 is held to an inner side of the front cover 20f or to the body frame 10 as required via a plurality of mounting portions 38 which are provided on the external surface so as to project therefrom.

Additionally, as shown in Fig. 4, a power supply socket 40 is provided in the first inner wall 31w in the article storage portion 30. This power supply socket 40 includes a socket connection port 40a for connection with a connection terminal portion lOOt of an external electric device 100 (Refer to Fig. 4.) such as a mobile phone. The article storage portion 30 is configured to have a size which enables the external electric device 100 to be stored therein (Refer to Fig. 7.).

Although the socket connection port 40a may be such that a connection terminal, not shown, is exposed, in this embodiment, as shown in Fig. 4, a socket lid 40af configured to cover the socket connection port 40a is provided for the purpose of protecting the connection terminal of the socket connection port 40a. This socket lid 40af may have a construction in which the socket lid 40af can be removed from the socket connection port 40a or in which an appropriate hinge construction is provided on the socket lid 40af so as to open and close the socket connection port 40a.

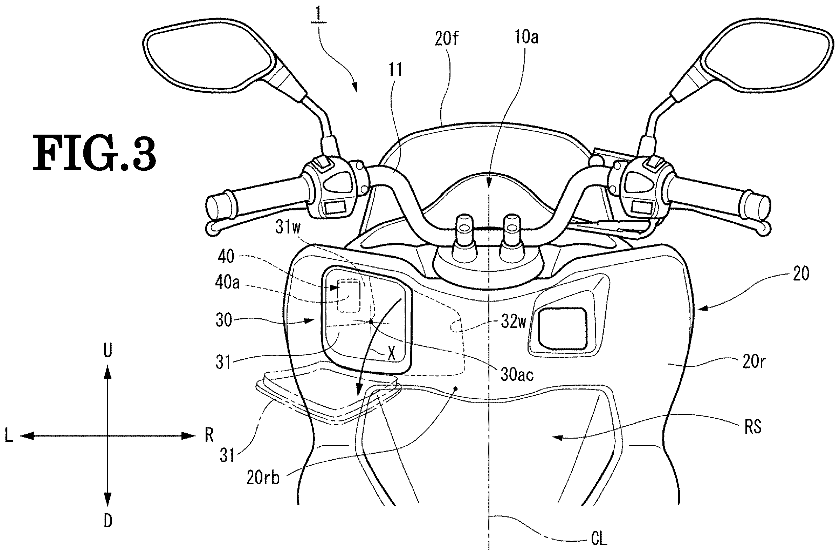

The socket connection port 40a of the power supply socket 40 is provided in the first inner wall 31w of the article storage portion 30 as shown in Figs. 3 and 4 and is disposed in a position which faces the opening portion 30a while being oriented to an exterior of the article storage portion 30. Consequently, when looked from the riding seat 12 side, the socket connection port 40a is disposed so as to be visible through the opening portion 30a when the lid member 31 is opened.

As shown in Figs. 4 and 6, the socket connection port 40a of the power supply socket 40 is provided to deflect outwards in the vehicle's width direction relative to an opening center 30ac of the opening portion 30a and is opened towards the opening center 30ac.

As shown in Figs. 5 and 6, the power supply socket 40 includes a substantially cylindrical socket main body 41. This socket main body 41 is disposed on a rear side (a front side) of the first inner wall 31w in such a way as to be inclined towards the front of the vehicle and outwards in the vehicle's width direction. Consequently, the socket connection port 40a is provided oriented inwards in the vehicle's width direction. In addition, conductors 47, 47 which are connected to a battery are connected to conductor connecting portions 41b, 41b at a distal end of the socket main body 41.

Thus, as has been described above, according to the article storage structure for the automatic two-wheeled vehicle 1 of this embodiment, the socket connection port 40a of the power supply socket 40 is provided in the first inner wall 31w which is situated in the position which faces the opening portion 30a of the article storage portion 30. Consequently, the socket connection port 40a is disposed in the position where the socket connection port 40a is easily visible through the opening portion 30a when the lid member 31 is opened. Therefore, an easy access from the opening portion 30a to the socket connection port 40a is provided, so that the external electric device 100 can easily be attached to and detached from the power supply socket 40.

According to the article storage structure for a motor vehicle 1 of this embodiment, the opening portion 30a of the article storage portion 30 is provided in the rear wall surface 20rb of the rear cover 20r. Consequently, the opening portion 30a is formed oriented towards the driver M who sits behind. Therefore, since the driver M can place and remove the external electric device 100 in and from the article storage portion 30 while remaining seated on the riding seat 12, the external electric device 100 can be attached to and detached from the power supply socket 40 further easily.

According to the article storage structure for the automatic two-wheeled vehicle 1 of this embodiment, the opening portion 30a of the article storage portion 30 is provided on the left-hand side of the vehicle's width direction center line CL, and the socket connection port 40a of the power supply socket 40 is provided oriented inwards in the vehicle's width direction. Consequently, for example, the driver M can place and remove an article in and from the article storage portion 30 while remaining seated on the riding seat 12. Thus, the external electric device 100 can be attached to and detached from the power supply socket 40 further easily.

According to the article storage structure for a motor vehicle 1 of this embodiment, the socket connection port 40a of the power supply socket 40 is provided to deflect outwards in the vehicle's width direction relative to the opening center 30ac of the opening portion 30a of the article storage portion 30 and is opened towards the opening center 30ac. Consequently, when the external electric device 100 is attached to and detached from the socket connection port 40a, the operator can locate his or her hand in the opening center 30ac so that the hand stays away from an edge portion 30ae of the opening portion 30a. Therefore, since the operator can avoid a risk of his or her hand being brought into contact with the edge portion 30ae, the external electric device 100 can be attached to and detached from the power supply socket 40 more easily.

According to the article storage structure for the automatic two-wheeled vehicle 1 of this embodiment, the socket connection port 40a of the power supply socket 40 is provided in the first inner wall 31w which is situated near the opening portion 30a of the article storage portion 30 and which faces the opening portion 30a. Consequently, the socket connection port 40s is disposed in the position where the socket connection port 40s is easily visible through the opening portion 30a, whereby the external electric device 100 can be attached to and detached from the power supply socket 40 further easily. Since the article to be stored is stored in the second storage space 30se which is situated further inwards than the first storage space 30fi, there occurs no such situation that the socket connection port 40a is hidden by the stored article, and hence, nothing interrupts the attachment and detachment of the external electric device 100.

According to the article storage structure for the automatic two-wheeled vehicle 1 of this embodiment, the second storage space 30se is disposed offset further downwards towards the lower side of the vehicle than the first storage space 30fi. Consequently, the article to be stored is stored in the second storage space 30se in such a way as to fall thereinto based on its own weight. Therefore, since the article to be stored is stored in the position which lies away from the socket connection port 40a which is provided in the first storage space 30fi, the external electric device 100 can be attached to and detached from the power supply socket 40 further easily. Since the second storage space 30se is the storage space which extends downwards, the article to be stored can be placed in and removed from the storage space easily.

Additionally, according to the article storage structure for the automatic two-wheeled vehicle 1 of this embodiment, the external wall 32uw of the second storage space 30se is formed inclined not only to follow the external surface 20fu of the front cover 20f but also to approach the internal wall 32iw of the second storage space 30se as it extends towards the front of the vehicle. Consequently, the second storage space 30se is disposed further inwards in the vehicle's width direction than the first storage space30fi. Therefore, since a risk of the socket connection port 40a being hidden by the article stored in the second storage space 30se can be avoided, the external electric device 100 can be attached to and detached from the power supply socket 40 further easily. Since the external wall 32uw of the second storage space 30se is formed so as to follow the external surface 20fu of the front cover 20f, the degree of freedom in designing the front cover 20f is enhanced, thereby making it possible to improve the external appearance of the automatic two-wheeled vehicle 1.

It is noted that the invention is not limited to what is illustrated in the embodiment and hence can be modified as required without departing from the spirit and scope of the invention.

For example, in the embodiment described above, while the article storage portion 30 is disposed on the left-hand side of the vehicle, the invention is not limited thereto, and hence, the article storage portion 30 may be disposed on a right-hand side of the vehicle.

In addition, in the embodiment described above, while the lid member 31 of the article storage portion 30 is constructed so as to be opened and closed in the vertical direction, the invention is not limited thereto and hence can be constructed so as to be opened and closed in a horizontal direction.

While the invention has been described in detail and by reference to the specific embodiment, it is obvious to those skilled in the art to which the invention pertains that various alterations or modifications can be made thereto without departing from the scope of the invention. This patent application is based on the Japanese Patent Application (No. 2013-116400) filed on May 31, 2013.

### Description of Reference Numerals and Characters

- 1: Automatic two-wheeled vehicle
- 10: Body Frame
- 10a: Vehicle front portion
- 11: Handlebar
- 12: Riding seat
- 15: Headstock
- 20: Cover member
- 20f: Front cover
- 20fu: External surface
- 20r: Rear cover
- 20rb: Rear wall surface
- 30: Article storage portion
- 30a: Opening portion
- 30ac: Opening center
- 30s: Storage space
- 30fi: First storage space
- 30se: Second storage space
- 31: Lid member
- 31w: First inner wall
- 32iw: Internal wall
- 32uw: External wall
- 32w: Second inner wall
- 40: Power supply socket
- 40a: Socket connection port
- 100: External electric device
- CL: Vehicle's width direction center line

## Claims

1. An article storage structure for an automatic two-wheeled vehicle (1) with
a handlebar (11) which is provided at a vehicle front portion (10a);
a riding seat (12) which is disposed behind the handlebar (11);
a cover member (20) which covers a vehicle external side;
the article storage structure comprising:
an article storage portion (30) which is disposed inside the cover member (20) and enables to store an article;
a lid member (31) which opens and closes an opening portion (30a) of the article storage portion (30); and
a power supply socket (40) which is provided in the article storage portion (30) and enables to connect with an external electric device (100), **characterized in that** a socket connection port (40a) of the power supply socket (40) is disposed in a position where the socket connection port (40a) faces the opening portion (30a),
wherein an storage space (30s) of the article storage portion (30) comprises:
a first storage space (30fi) which includes a first inner wall (31w) which faces the opening portion (30a); and
a second storage space (30se) which includes a second inner wall (32w) which is positioned closer to the front of the vehicle,
wherein the socket connection port (40a) is provided in the first inner wall (31w), and
an external wall (32uw) of the second storage space (30se) is formed inclined not only to follow an external surface (20fu) of the front cover (20f) but also to approach an internal wall (32iw) of the second storage space (30se) as it extends towards the front of the vehicle, and **in that**
the second inner wall (32w) is positioned further inwards in the vehicle's width direction than the first inner wall (31w).

2. The article storage structure for the automatic two-wheeled vehicle (1) according to claim 1,
wherein the cover member (20) comprises a front cover (20f) which covers a front of a headstock (15) and a rear cover (20r) which covers a rear of the headstock (15), and
the opening portion (30a) is provided in a rear wall surface (20rb) of the rear cover (20r) which is oriented to the rear of a vehicle body.

3. The article storage structure for the automatic two-wheeled vehicle (1) according to claim 1 or 2,
wherein the socket connection port (40a) is provided to deflect from an opening center (30ac) of the opening portion (30a) in a vehicle's width direction and is opened towards the opening center (30ac).

4. The article storage structure for the automatic two-wheeled vehicle (1) according to any one of claims 1 to 3,
wherein the opening portion (30a) is provided on a left-hand or right-hand side of a vehicle's width direction center line (CL), and
the socket connection port (40a) is provided oriented inwards in the vehicle's width direction.

5. The article storage structure for the automatic two-wheeled vehicle (1) according to claim 1,
wherein the second storage space (30se) is disposed offset in a further downward side of the vehicle than the first storage space (30fi).

## Patentansprüche

1. Artikelaufbewahrungsstruktur für ein automatisches zweirädriges Fahrzeug (1), mit:
einem Lenker (11), der an einem Fahrzeugfrontbereich (10a) vorgesehen ist;
einem Fahrsitz (12), der hinter dem Lenker (11) angeordnet ist;
einem Abdeckelement (20), das eine Fahrzeugaußenseite bedeckt;
wobei die Artikelaufbewahrungsstruktur aufweist:
einen Artikelaufbewahrungsbereich (30), der im Inneren des Abdeckelements (20) angeordnet ist und geeignet ist zum Aufbewahren eines Artikels;
ein Deckelelement (31), das einen Öffnungsbereich (30a) des Artikelaufbewahrungsbereichs (30) öffnet und schließt; und
eine Energieversorgungsbuchse (40), die in dem Artikelaufbewahrungsbereich (30) vorgesehen ist und geeignet ist zum Verbinden mit einer externen elektrischen Einrichtung (100),
**dadurch gekennzeichnet, dass**
ein Buchsenverbindungsanschluss (40a) der Energieversorgungsbuchse (40) an einer Position angeordnet ist, an der der Buchsenverbindungsanschluss (40a) auf den Öffnungsbereich (30a) gerichtet ist,
bei der ein Aufbewahrungsraum (30s) des Artikelaufbewahrungsbereichs (30) aufweist:
einen ersten Aufbewahrungsraum (30fi), der eine erste Innenwand (31w) aufweist, die auf den Öffnungsbereich (30a) gerichtet ist; und
einen zweiten Aufbewahrungsraum (30se), der eine zweite Innenwand (32w) aufweist, die näher an der Vorderseite des Fahrzeugs positioniert ist;
bei der der Buchsenverbindungsanschluss (40a) in der ersten Innenwand (31w) vorgesehen ist, und
eine Außenwand (32uw) des zweiten Aufbewahrungsraums (30se) geneigt ausgebildet ist, so dass sie nicht nur einer Außenfläche (20fu) der Frontabdeckung (20f) folgt, sondern sich auch einer Innenwand (32iw) des zweiten Aufbewahrungsraums (30se) annähert, wenn sie sich in Richtung zu der Vorderseite des Fahrzeugs erstreckt, und dass
die zweite Innenwand (32w) in der Fahrzeugbreitenrichtung weiter innen positioniert ist als die erste Innenwand (31w).

2. Artikelaufbewahrungsstruktur für das automatische zweirädrige Fahrzeug (1) nach Anspruch 1,
bei der das Abdeckelement (20) eine vordere Abdeckung (20f), die eine Vorderseite eines Triebgestells (15) bedeckt, und eine hintere Abdeckung (20r) aufweist, die eine Rückseite des Triebgestells (15) bedeckt, und
der Öffnungsbereich (30a) in einer hinteren Wandfläche (20rb) der hinteren Abdeckung (20r) vorgesehen ist, die zu der Rückseite einer Fahrzeugkarosserie ausgerichtet ist.

3. Artikelaufbewahrungsstruktur für das automatische zweirädrige Fahrzeug (1) nach Anspruch 1 oder 2,
bei der der Buchsenverbindungsanschluss (40a) derart vorgesehen ist, dass er von einer Öffnungsmitte (30ac) des Öffnungsbereichs (30a) in der Fahrzeugbreitenrichtung abweicht und in Richtung zu der Öffnungsmitte (30ac) geöffnet ist.

4. Artikelaufbewahrungsstruktur für das automatische zweirädrige Fahrzeug (1) nach einem der Ansprüche 1 bis 3,
bei der der Öffnungsbereich (30a) auf einer linken oder rechten Seite einer Fahrzeugbreitenrichtung-Mittenlinie (CL) vorgesehen ist, und
der Buchsenverbindungsanschluss (40a) derart vorgesehen ist, dass er in der Fahrzeugbreitenrichtung nach innen ausgerichtet ist.

5. Artikelaufbewahrungsstruktur für das automatische zweirädrige Fahrzeug (1) nach Anspruch 1,
bei der der zweite Aufbewahrungsraum (30se) zu einer weiter unten liegenden Seite des Fahrzeugs als der erste Aufbewahrungsraum (30fi) versetzt angeordnet ist.

## Revendications

1. Structure de stockage d'articles pour un véhicule à deux roues automatique (1) avec
un guidon (11) qui est prévu sur une portion avant de véhicule (10a) ;
un siège conducteur (12) qui est disposé derrière le guidon (11) ; un élément de recouvrement (20) qui recouvre un côté externe de véhicule ;
la structure de stockage d'article comprenant :
une portion de stockage d'article (30) qui est disposée dans l'élément de recouvrement (20) et permet de stocker un article ;
un élément de couvercle (31) qui ouvre et ferme une portion d'ouverture (30a) de la portion de stockage d'article (30) ; et
une prise d'alimentation (40) qui est prévue dans la portion de stockage d'article (30) et permet la liaison avec un dispositif électrique externe (100),
**caractérisée en ce que**
un orifice de connexion de prise (40a) de la prise d'alimentation (40) est disposé dans une position où l'orifice de connexion de prise (40a) fait face à la portion d'ouverture (30a),
dans laquelle un espace de stockage (30s) de la portion de stockage d'article (30) comprend :
un premier espace de stockage (30fi) qui inclut une première paroi intérieure (31w) qui fait face à la portion d'ouverture (30a) ; et
un second espace de stockage (30se) qui inclut une seconde paroi intérieure (32w) qui est positionnée plus près de l'avant du véhicule,
dans laquelle l'orifice de connexion de prise (40a) est prévu dans la première paroi intérieure (31w), et
une paroi externe (32uw) du second espace de stockage (30se) est formée inclinée non seulement pour suivre une surface externe (20fu) du recouvrement avant (20f) mais aussi pour approcher une paroi interne (32iw) du second espace de stockage (30se) lorsqu'elle s'étend vers l'avant du véhicule, et **en ce que**
la seconde paroi intérieure (32w) est positionnée plus loin vers l'intérieur dans la direction de la largeur du véhicule que la première paroi intérieure (31w).

2. Structure de stockage d'article pour le véhicule à deux roues automatique (1) selon la revendication 1,
dans laquelle l'élément de recouvrement (20) comprend un recouvrement avant (20f) qui recouvre une partie avant d'une poupée (15) et un recouvrement arrière (20r) qui recouvre une partie arrière de la poupée (15), et
la portion d'ouverture (30a) est prévue dans une surface de paroi arrière (20rb) du recouvrement arrière (20r) qui est orienté vers l'arrière d'un corps de véhicule.

3. Structure de stockage d'article pour le véhicule à deux roues automatique (1) selon la revendication 1 ou 2,
dans laquelle l'orifice de connexion de prise (40a) est prévu pour dévier depuis un centre d'ouverture (30ac) de la portion d'ouverture (30a) dans une direction de la largeur de véhicule et est ouvert vers le centre d'ouverture (30ac).

4. Structure de stockage d'article pour le véhicule à deux roues automatique (1) selon l'une quelconque des revendications 1 à 3,
dans laquelle la portion d'ouverture (30a) est prévue sur un côté gauche ou droit d'une ligne centrale de direction de la largeur de véhicule (CL), et
l'orifice de connexion de prise (40a) est prévu orienté vers l'intérieur dans la direction de la largeur de véhicule.

5. Structure de stockage d'article pour le véhicule à deux roues automatique (1) selon la revendication 1,
dans laquelle le second espace de stockage (30se) est disposé en déport dans un côté plus loin vers le bas du véhicule que le premier espace de stockage (30fi).
